# EUROPÄISCHE PATENTSCHRIFT

(11) **EP 1 147 042 B1**
(45) Veröffentlichungstag und Bekanntmachung des Hinweises auf die Patenterteilung: **09.04.2003**
(21) Anmeldenummer: 00907438.6
(22) Anmeldetag: 22.01.2000
(51) Int. Cl.: B62D 51/06, A63C 17/12

(54) **ZUGMASCHINE FÜR PERSONEN, WELCHE SICH AUF ROLLEN ODER GLEITKÖRPERN BEWEGEN**
TOWING VEHICLE WHICH MOVES ON ROLLERS OR SLIDING BODIES, FOR TOWING PERSONS
VEHICULE TRACTEUR POUR PERSONNES SE DEPLA ANT SUR DES ROULETTES OU SUR DES CORPS DE GLISSEMENT

(30) Priorität: 26.01.1999 DE 19902963
(43) Veröffentlichungstag der Anmeldung: 24.10.2001
(73) Patentinhaber: Stinglhammer, Max, 86456 Holzhausen (DE); Stritzl, Thomas, 86159 Augsburg (DE)
(72) Erfinder: Timm, Antonio, 22880 Wedel (DE)
(74) Vertreter: Meyer, Ludgerus A.
(86) Internationale Anmeldenummer: DE0000188
(87) Internationale Veröffentlichungsnummer: WO00044607

(56) Entgegenhaltungen:
- WO-A-97/12651
- FR-A- 1 169 880
- FR-A- 2 565 118

## Beschreibung

Die Erfindung betrifft eine Zugmaschine für Personen, welche sich auf Rollen oder Gleitkörpem bewegen, nach dem Oberbegriff des Anspruchs 1.

In den vergangenen Jahren hat die Fortbewegung auf Rollen oder Kufen eine immer stärkere Bedeutung erfahren. Zur Fortbewegung auf Rollen werden beispielsweise Skateboards, Mountainboards, Longboards, Snakeboards oder Inline-Skates verwendet. Die Fortbewegung auf Gleitkörpern kann über Schlittschuhe, Schlitten, Snowboards, Ski und andere erfolgen, wobei spezielle Gleitkörper auch zur Fortbewegung auf dem Wasser verwendet werden. Personen, die sich mit den genannten Sportgeräten fortbewegen, werden nachstehend als Skater bezeichnet.

Die Höchstgeschwindigkeit eines Skaters, der sich durch eigene Muskelkraft bewegt, hängt von der Muskulatur und Kondition sowie dem Gefälle der Fahrstrecke ab. Selbstverständlich spielt auch die Art des Fortbewegungsmittels eine Rolle.

Die Erfahrung zeigt auch, dass viele Skater gerne schneller fahren möchten, als Muskulatur, Kondition oder Fahrstrecke dies zulassen. Bei Down-Hill-Wettbewerben, bei denen Skater gesperrte Gefällestrecken herunterfahren, werden Höchstgeschwindigkeiten von beispielsweise 80 km/h erreicht. Der Weltrekord für die Geschwindigkeit eines von einem Rennwagen gezogenen Inline-Skaters liegt bei über 300 km/h.

Mit heutigen Inline-Skates kann ein durchschnittlicher Skater auf ebener Fahrstrecke ca. 35 km/h mit eigener Muskelkraft fahren.

Das Erreichen höherer Geschwindigkeiten kann also nur durch eine Zugmaschine erfolgen. Es besteht Bedarf, für die Fortbewegung von Personen, insbesondere auf Rollen oder Gleitkörpern, eine Zugmaschine anzugeben, welche hohe Geschwindigkeiten erreicht, welche trotz relativ hohen Gewichts sicher lenkbar und bremsbar ist und gleichwohl leicht zu handhaben und zu transportieren ist.

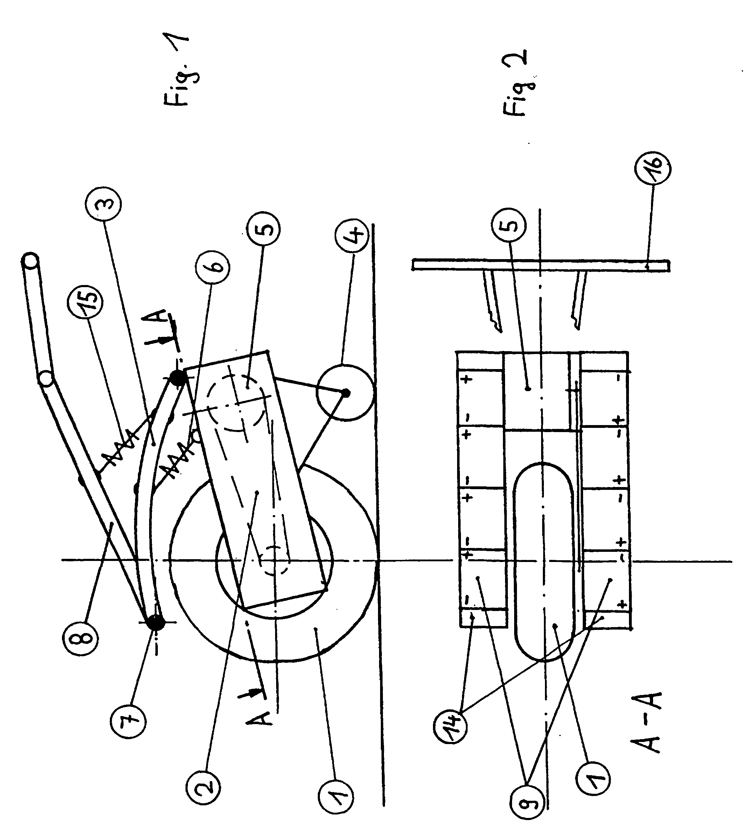

Aus der US 4,456,089-A ist eine Zugmaschine für Personen, welche sich auf Rollen bewegt, bekannt, bei der die Zugmaschine mit einem motorischen Antrieb versehen ist, welcher ein in einem Fahrgestell gelagertes Antriebsrad antreibt. Die Zugmaschine ist von der Person über eine Längssäule steuerbar. Das Problem dieser Einrichtung liegt darin, daß das komplette Fahrzeuggewicht mit Motor, Getriebe, Tank und Fahrgestell bei der beispielsweise in Fig. 1 dargestellten Schrägstellung von der zu ziehenden Person gehalten werden muß, wobei das Gewicht sich noch durch das Antriebsmoment bei Beschleunigungen erhöht bzw. bei Abbremsen verringert. Fahrzeuggewicht und Drehmoment des Motors erzeugen daher unkontrollierbare Kräfte, welche insbesondere bei hohen Geschwindigkeiten vom Skater nicht mehr kontrollierbar sind. Es kann daher zu schweren Unfällen kommen.

Bei der aus der US 5,385,210 bekannten Einrichtung ist zwar das Eigengewicht der Zugmaschine besser ausbalanciert, jedoch sind auch bei dieser Einrichtung die Beschleunigungs- und Bremskräfte nicht kontrollierbar, so daß ähnliche Probleme wie beim zuvor genannten Stand der Technik auftreten.

Die aus der gattungsgemäßen FR 2 565 118 A3 bekannte Schleppvorrichtung ist ebenfalls mit einem motorisch angetriebenen Rad ausgestattet, das in einer Gabel montiert ist, die mit einer Lenkstange verbunden ist. Die Einrichtung weist hinter dem Antriebsrad zwei Stützräder auf, die die Einrichtung stabilisieren. Die starre Anordnung der Elemente erlaubt allerdings keine flexible Stellung der Lenkstange in Bezug auf das Antriebsrad, so daß ein Ausbalancieren der Schleppvorrichtung an die Fahrtbewegung - z. B. in Kurven - nicht möglich ist, was jedoch gerade bei hohen Geschwindigkeiten von Vorteil ist.

Ähnliche Einrichtungen, jedoch zum Schieben einer sich bewegenden Personen sind aus der US 5,562,176 bekannt. Aus der WO 97/18866 ist ein Fortbewegungsmittel als Schiebemaschine für Skifahrer bekannt, welche einen Raupenantrieb aufweist.

Keine der dargestellten Einrichtungen ist geeignet für hohe Geschwindigkeiten, wie sie insbesondere bei Rennveranstaltungen gewünscht werden, weil die notwendige Sicherheit und leichte Handhabbarkeit nicht gegeben ist. Außerdem ist keine der bekannten Einrichtungen zum Ziehen im Schneegelände geeignet.

Der Erfindung liegt daher ausgehend von der FR 2 565 118 A3 die Aufgabe zugrunde, eine Zugmaschine für Personen, welche sich auf Rollen oder Gleitkörpern bewegt, anzugeben, welche motorisch angetrieben für hohe Fortbewegungsgeschwindigkeit, insbesondere auf Asphalt oder im Schnee, geeignet ist, ein sicheres Lenken, Beschleunigen und Abbremsen erlaubt und leicht handhabbar ist.

Diese Aufgabe wird durch die im Anspruch 1 angegebene Erfindung gelöst. Vorteilhafte Weiterbildungen der Erfindung sind in Unteransprüchen angegeben.

Die erfindungsgemäße Einrichtung betrifft eine Zugmaschine, welche ein in einem Fahrwerk gelagertes Antriebsrad aufweist und die Zugmaschine von der Person über eine Lenksäule steuerbar ist, wobei das Fahrwerk zusätzlich ein hinter dem Antriebsrad angeordnetes Stützrad aufweist. Erfindungsgemäß ist die Lenksäule über ein parallel zur Drehachse des Antriebsrades verlaufendes Nickgelenk am Fahrgestell befestigt und das Nickgelenk befindet sich vor der Achse des Antriebsrades. Das Stützrad nimmt neben dem Antriebsrad nahezu das gesamte Gewicht des Fahrgestells, des Motors, des Tanks usw. auf, so daß das Eigengewicht der Zugmaschine nicht von der zu ziehenden Person zu tragen ist. Mit zunehmender Geschwindigkeit erhöht sich dabei die Radlast des Stützrades aufgrund der Zuglast und des Fahrtwind-Drucks auf die Verkleidung der Zugmaschine. Ferner übernimmt das Stützrad die Beschleunigungskräfte, so daß gerade beim Anfahren der Person kein zusätzliches Moment auf die Lenksäule einwirkt. Durch geeignete Anordnung der Gewichtsverteilung auf der Zugmaschine können auch ohne weiteres die Bremskräfte so ausgeglichen werden, daß beim Bremsen kein Überschlag der Zugmaschine auftreten kann.

Um die Stellung der Lenksäule gegenüber dem Fahrgestell flexibel ändern zu können, ist zwischen Fahrgestell und Lenksäule ein parallel zur Drehachse des Antriebsrades verlaufendes Nickgelenk angeordnet, welches sich vor der Achse des Antriebsrades befindet. Vorzugsweise ist dem Nickgelenk ein Federelement zugeordnet, so daß die Lenksäule in einer Grundstellung gehalten werden kann, ohne daß Gewichtskräfte aufgenommen werden müssen. Sofern gewünscht, kann die Lenksäule angehoben werden und damit kann je nach Einstellung der Federkennlinie das Stützrad entlastet werden und ggf. ganz hoch angehoben werden, beispielsweise wenn eine enge Kurvenfahrt erwünscht wird. Das Anheben kann erleichtert werden, wenn ein erheblicher Teil des Gewichts der Zugmaschine (z. B. in Form eines Bleipaketes) vor der Antriebsachse plaziert wird.

Um Bewegungen des Fahrgestells gegenüber der Lenksäule weiter abzumildern, kann ein Zwischenlenker vorhanden sein, der zwischen Nickgelenk und einem Federgelenk am Fahrgestell befestigt ist. Das Federgelenk befindet sich vorzugsweise am Fahrgestell zwischen Antriebsrad und Stützrad. Die Gelenke können auch durch Stoßdämpfer ergänzt werden. Vorzugsweise sind die Federeigenschaften der Federn am Nickgelenk bzw. dem Federgelenk einstellbar ausgestaltet.

In weitergebildeten Ausführungsformen kann das Stützrad auch gegenüber dem Fahrgestell federnd gelagert sein, um Schlagkräfte auf das Fahrgestell abzumildern. Auch kann vorgesehen sein, das Stützrad zusätzlich motorisch anzutreiben. Für den Einsatz im Schnee kann vorgesehen sein, Stützrad und Antriebsrad über ein umlaufendes Raupenband miteinander zu verbinden.

Um die Zugmaschine auch für andere Zwecke einsetzen zu können, kann diese eine Kupplungsvorrichtung aufweisen, an die beispielsweise ein Wagen oder dergleichen anhängbar ist.

Die erfindungsgemäße Ausgestaltung der Zugmaschine erlaubt es, insbesondere in ihren bevorzugten Ausführungsformen, hohe Fahrgeschwindigkeiten auf unterschiedlichem Untergrund zu erzielen. Es kann ein starker Motor verwendet werden, der für hohe Geschwindigkeit benötigt wird und entsprechend geeignet ist. Das Drehmoment des Motors wird weich aufgefangen. Die Zugmaschine kann beschleunigt und abgebremst werden, ohne daß der Skater eine entspannte Fahrposition verlassen muß. Er muß keine Kraft zum Halten des Lenkers aufbringen.

Bei der bevorzugten Ausgestaltung mit Doppelfedersystem werden Bodenebenheiten gedämpft und hohe Geschwindigkeiten werden erleichtert. Bei hohen Geschwindigkeiten verlagert die gezogene Person den eigenen Schwerpunkt nach unten. Der Aufbau der Zugmaschine bewegt sich, unterstützt vom Druck des Fahrtwindes und der Zuglast des Skaters ebenfalls nach unten und steht immer im optimalen Winkel zu den Armen des Skaters. Beim Bremsen stützt sich der Skater mit seinem Körpergewicht gegen das Lenkelement ab. Entsprechend der Bremsintensität wird das Fahrgestell durch die Anordnung des Nickgelenks nach unten gedrückt und verhindert damit ein Überschlagen der Zugmaschine.

Die Erfindung wird nachstehend anhand eines Ausführungsbeispiels näher erläutert. Es zeigen:
- Fig. 1: eine erfindungsgemäße Zugmaschine in Seitenansicht, geeignet für den Straßenverkehr,
- Fig. 2: eine Zugmaschine gemäß Fig. 1 in Aufsicht,
- Fig. 3: eine Zugmaschine zur Verwendung im Schneegelände,
- Fig. 4: eine Zugmaschine gemäß Fig. 3 in Seitenansicht, und
- Fig. 5: eine Zugmaschine gemäß Fig. 3 in Aufsicht.

Die in Fig. 1 dargestellte Zugmaschine weist ein in einem Fahrgestell 2 gelagertes Antriebsrad 1 auf, wobei am hinteren Ende des Fahrgestells 2 ein Stützrad 4 vorgesehen ist. Etwa oberhalb des Stützrades 4 befindet sich der Motor 5 zum Antrieb des Antriebrades, beispielsweise über eine Riemenscheibe.

An der hinteren Oberseite des Fahrgestells 2 ist ein Zwischenlenker 3 angelenkt, der über ein Federbein 6 federnd gelagert ist. Der Zwischenlenker führt zur Vorderseite der Zugmaschine in ein Nickgelenk 7, das die Lenksäule 8 trägt. Zwischen Lenksäule 8 und Zwischenlenker 3 ist ein weiteres Federbein 15 angeordnet.

Zur Verwendung der Zugmaschine wird vor Beginn einer Fahrt am Federbein 6 und/oder dem Federbein 15 der Winkel zwischen Fahrgestell 2 und Zwischenlenker 3 oder der Lenksäule 8 eingestellt. Die Lenksäule ist so zu positionieren, daß sich die Arme beim Bremsen optimal abstützen können und der Skater die Zugmaschine gut handhaben kann. Das oder die Federbeine ermöglichen eine indivduelle Anpassung der Zugmaschine für Personen unterschiedlicher Körpergröße oder bei Verwendung unterschiedlicher Raddurchmesser. Die Zugmaschine erlaubt es auch, die Länge der Lenksäule 8 einzustellen, je nach dem, ob ein Inline-Skater oder ein Skater mit Longboard die Zugmaschine verwendet, welche mehr oder weniger Abstand zum Fahrgestell benötigen.

Während der Fahrt steht der Skater mit seinen Inline-Skates aufrecht und hält mit beiden Händen den Lenker 16 an der Lenkstange 8. Beim Betätigen des Gasgriffes entsteht am Antriebsrad ein Drehmoment, das die Zugmaschine antreibt. Dieses Drehmoment erzeugt eine Abwärtsbewegung der Lenksäule. Diese Abwärtsbewegung wird durch das hinter dem Antriebsrad angebrachte Stützrad aufgefangen. Die Zugmaschine setzt sich in Bewegung.

Während der Fahrt befindet sich die Zugmaschine im Gleichgewicht, weil das Motordrehmoment und das Gewicht vom Stützrad getragen werden. Der Skater kann daher mühelos beschleunigen und sich auf seine Beinarbeit konzentrieren.

In einer Kurve verlagert der Skater das Gewicht der Zugmaschine und sein eigenes Gewicht nach links oder rechts. Auch während der Kurvendurchfahrt kann er durch leichtes Kippen oder Heben des Lenkers sowie durch Motorkraft oder Bremsen die Kurvenfahrt korrigieren.

Zum Bremsen zieht der Skater am Bremshebel. Durch das Gesamtgewicht der Zugmaschine und die Gewichtsverteilung hat der die Bremskraft übertragende Reifen erhöhte Haftung auf dem Asphalt. Der Skater kann sich bis zum Stillstand der Zugmaschine mit den Armen am Lenker abstützen. Je nach Intensität der Bremsung drückt er die Lenksäule nach unten. Über die Federbeine 6, 15 wird dem Bremsmoment entgegengewirkt, so daß ein Überschlagen der Zugmaschine verhindert wird.

Fig. 2 zeigt die Zugmaschine von Fig. 1 in Aufsicht. Der Motor 5 befindet sich, wie dargestellt, oberhalb des Stützrades 4 und hinter dem Antriebsrad 1. In aufrechter Stellung befindet sich die Zugmaschine daher im wesentlichen in Gleichgewichtsstellung. Aufgrund des niedrigen Schwerpunktes der Zugmaschine treten an der Lenkstange 16 nur geringe Seitenkräfte auf.

Sofern ein weiterer Gewichtsausgleich am Fahrgestell erforderlich ist, können zusätzliche Bleigewichte 14 vorgesehen sein. Auch die Batterie 9 unterstützt den Gewichtsausgleich. Der Antrieb des Motors 5 kann als Verbrennungsmotor ausgeführt sein, wobei ein Tank erforderlich ist. Der Motor kann jedoch auch als Elektromotor ausgestaltet sein, so daß zusätzliche Batterien benötigt werden.

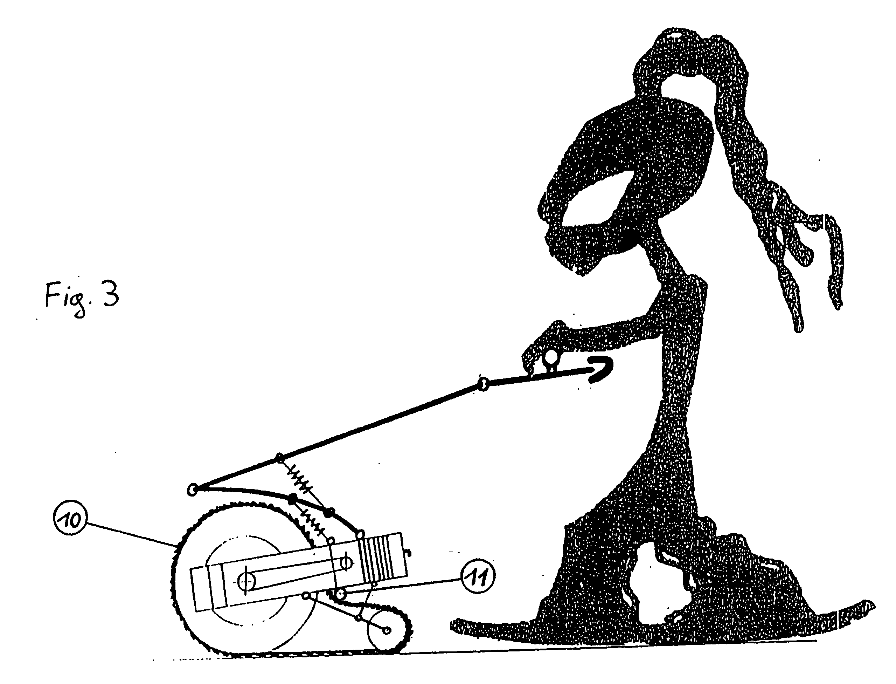

Fig. 3 zeigt eine Darstellung einer Zugmaschine zur Verwendung im Schneegelände, wobei die Proportionen zwischen einer stilistisch dargestellten Person und der Zugmaschine deutlich werden. In diesem Fall weist die Zugmaschine ein Raupenband 17 auf, welches das Antriebsrad 1 und das Stützrad 4 umspannt. Zum Ausgleich von Längentoleranzen des Raupenbandes ist eine Umlenkrolle 11 vorgesehen.

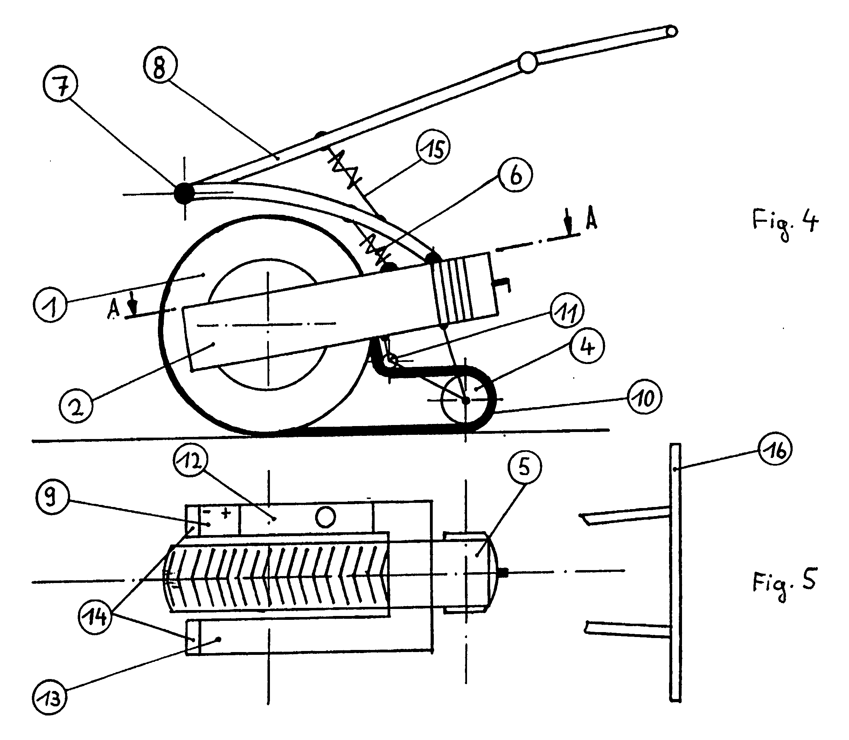

Fig. 4 zeigt eine Zugmaschine von Fig. 3 in Seitenansicht. Der Aufbau entspricht im wesentlichen dem Aufbau von Fig. 1 mit Ausnahme des Raupenbandes 10 und der Umlenkrolle 11.

In Fig. 5 ist eine Aufsicht einer Einrichtung von Fig. 3 dargestellt, welche auch die Anordnung eines Tanks 12 gegenüber dem Getriebe 13 zeigt.

Die Zugmaschine ist insbesondere modulartig aufgebaut, und kann an den Gelenkpunkten leicht zerlegt werden, um insbesondere einen leichten Transport der Zugmaschine, beispielsweise im Kofferraum eines Fahrzeuges, zu ermöglichen.

### Bezugszeichenliste

- 1: Antriebsrad
- 2: Fahrgestell
- 3: Zwischenlenker
- 4: Stützrad
- 5: Motor
- 6: Federbein
- 7: Nickgelenk
- 8: Lenksäule
- 9: Batterie
- 10: Raupenband
- 11: Umlenkrolle
- 12: Tank
- 13: Getriebe
- 14: Bleigewicht
- 15: Federbein
- 16: Lenkstange

## Patentansprüche

1. Zugmaschine für Personen, welche sich auf Rollen oder Gleitkörperm bewegen, wobei die Zugmaschine mit einem motorischen Antrieb versehen ist, welcher ein in einem Fahrgestell (2) gelagertes Antriebsrad (1) antreibt, wobei das Fahrgestell (2) zusätzlich ein hinter dem Antriebsrad (1) angeordnetes Stützrad (4) aufweist und die Zugmaschine von der Person über eine Lenksäule (8) steuerbar ist, **dadurch gekennzeichnet, daß** die Lenksäule (8) über ein parallel zur Drehachse des Antriebrades (1) verlaufendes Nickgelenk (7) am Fahrgestell (2) befestigt ist, wobei das Nickgelenk (7) sich vor der Achse des Antriebrades (1) befindet.

2. Zugmaschine nach Anspruch 1, **dadurch gekennzeichnet, daß** zwischen Fahrgestell (2) und Lenksäule (8) ein Federelement (6) angeordnet ist.

3. Zugmaschine nach Anspruch 2, **dadurch gekennzeichnet, daß** zwischen Fahrgestell (2) und Lenksäule (8) ein Zwischenlenker (3) angeordnet ist, wobei sich das Nickgelenk (7) zwischen Lenksäule (8) und Zwischenlenker (3) befindet und der Zwischenlenker (3) über ein Federgelenk am Fahrgestell befestigt ist.

4. Zugmaschine nach Anspruch 3, **dadurch gekennzeichnet, daß** das Federgelenk am Fahrgestell zwischen Antriebsrad (1) und Stützrad (4) angeordnet ist.

5. Zugmaschine nach Anspruch 2 oder 3, **dadurch gekennzeichnet, daß** zwischen Fahrgestell (2) und Lenksäule (8) zusätzlich wenigstens ein Stoßdämpfer angeordnet ist.

6. Zugmaschine nach Anspruch 2, 3 oder 4, **dadurch gekennzeichnet, daß** die Federeigenschaften der dem Nickgelenk und/oder dem Federgelenk zugeordneten Federn einstellbar ausgestaltet sind.

7. Zugmaschine nach einem der vorhergehenden Ansprüche, **gekennzeichnet durch** eine von der Person über die Lenksäule betätigbare Brems- und Geschwindigkeitssteuerung.

8. Zugmaschine nach einem der Ansprüche 1 - 7, **dadurch gekennzeichnet, daß** das Stützrad gegenüber dem Fahrgestell federnd gelagert ist.

9. Zugmaschine nach einem der Ansprüche 1 - 8, **dadurch gekennzeichnet, daß** das Stützrad ebenfalls motorisch antreibbar ist.

10. Zugmaschine nach einem der Ansprüche 1 - 9, **dadurch gekennzeichnet, daß** der Motor derart im Fahrwerk angeordnet ist, daß das Motorgewicht im wesentlichen vom Stützrad getragen wird.

11. Zugmaschine nach einem oder mehreren der vorhergehenden Ansprüche, **dadurch gekennzeichnet, daß** Antriebsrad und Stützrad über ein beide Räder umspannendes Raupenband (10) verbunden sind.

12. Zugmaschine nach einem der vorhergehenden Ansprüche, **dadurch gekennzeichnet, daß** das Fahrgestell mit einer Kupplungsvorrichtung zum Anhängen eines Wagens oder dergleichen versehen ist.

## Claims

1. Towing vehicle for towing persons which move on rollers or gliding bodies, the towing vehicle having a motor drive which drives a drive wheel (1) mounted in a chassis (2), the chassis (2) also having a support wheel (4) located behind the drive wheel (1), the person being able to steer the towing vehicle by means of a steering column (8), **characterized in that** the steering column (8) being secured to the chassis (2) by means of a pitch joint (7) running parallel to the axis of rotation of the drive wheel (1), the pitch joint (7) being situated in front of the axis of the drive wheel (1).

2. Towing vehicle in accordance with claim 1, **characterized in that** a spring element (6) being located between the chassis (2) and the steering column (8).

3. Towing vehicle in accordance with claim 2, **characterized in that** an intermediate steering element (3) being located between the chassis (2) and the steering column (8), the pitch joint (7) being situated between the steering column (8) and the intermediate steering element (3) and the intermediate steering element (3) being fixed to the chassis by means of a spring joint.

4. Towing vehicle in accordance with claim 3, **characterized in that** the spring joint being located on the chassis between the drive wheel (1) and the support wheel (4).

5. Towing vehicle in accordance with claim 2 or 3, **characterized in that** at least one shock absorber being located between the chasses (2) and the steering column (8).

6. Towing vehicle in accordance with claims 2, 3 or 4, **characterized in that** the resilience of the springs associated with the pitch joint and/or the spring joint being adjustable.

7. Towing vehicle in accordance with one of the preceding claims, **characterized in that** the person being able to control the braking and speed via the steering column.

8. Towing vehicle in accordance with one of claims 1 - 7, **characterized in that** the support wheel being spring mounted with respect to the chassis.

9. Towing vehicle in accordance with one of claims 1 - 8, **characterized in that** the support also being motor-driven.

10. Towing vehicle in accordance with one of claims 1 - 9, **characterized in that** the motor being mounted in the chassis in such a way that the weight of the motor is borne essentially by the support wheel.

11. Towing vehicle in accordance with one or more of the preceding claims, **characterized in that** the drive wheel and support wheel being connected by a creeper band (10) which encompasses both wheels.

12. Towing vehicle in accordance with one of the preceding claims, **characterized in that** the chassis being equipped with a coupling device for connecting a wagon or the like.

## Revendications

1. Dispositif tracteur pour des personnes qui se déplacent sur des roulettes ou sur des corps de glissement, ce dispositif étant pourvu d'un entraînement par moteur qui entraîne une roue motrice (1) montée sur un châssis (2), lequel châssis (2) comporte en outre une roue d'appui (4) disposée derrière la roue motrice (1), et le dispositif tracteur pouvant être dirigé par la personne grâce à une colonne de direction (8), **caractérisé en ce que** la colonne de direction (8) est fixée au châssis (2) par l'intermédiaire d'une articulation de tangage (7) parallèle à l'axe de rotation de la roue motrice (1), l'articulation de tangage (7) se trouvant devant l'axe de la roue motrice (1).

2. Dispositif tracteur selon la revendication 1, **caractérisé en ce qu'**un élément formant ressort (6) est disposé entre le châssis (2) et la colonne de direction (8).

3. Dispositif tracteur selon la revendication 2, **caractérisé en ce qu'**un bras oscillant intermédiaire (3) est disposé entre le châssis (2) et la colonne de direction (8), l'articulation de tangage (7) se trouvant entre la colonne de direction (8) et ledit bras oscillant (3) et ce dernier étant fixé au châssis grâce à une articulation à ressort.

4. Dispositif tracteur selon la revendication 3, **caractérisé en ce que** l'articulation à ressort est disposée sur le châssis entre la roue motrice (1) et la roue d'appui (4).

5. Dispositif tracteur selon la revendication 2 ou 3, **caractérisé en ce qu'**au moins un amortisseur est disposé en supplément entre le châssis (2) et la colonne de direction (8).

6. Dispositif tracteur selon la revendication 2, 3 ou 4, **caractérisé en ce que** les caractéristiques de ressort des ressorts associés à l'articulation de tangage et/ou à l'articulation à ressort sont réglables.

7. Dispositif tracteur selon l'une des revendications précédentes, **caractérisé par** une commande de freinage et de vitesse apte à être actionnée par la personne par l'intermédiaire de la colonne de direction.

8. Dispositif tracteur selon l'une des revendications 1 à 7, **caractérisé en ce que** la roue d'appui est suspendue sur ressort par rapport au châssis.

9. Dispositif tracteur selon l'une des revendications 1 à 8, **caractérisé en ce que** la roue d'appui est apte à être entraînée elle aussi par un moteur.

10. Dispositif tracteur selon l'une des revendications 1 à 9, **caractérisé en ce que** le moteur est disposé dans le châssis de telle sorte que son poids soit porté essentiellement par la roue d'appui.

11. Dispositif tracteur selon l'une au moins des revendications précédentes, **caractérisé en ce que** la roue d'entraînement et la roue d'appui sont reliées par une chenille (10) qui couvre les deux roues.

12. Dispositif tracteur selon l'une des revendications précédentes, **caractérisé en ce que** le châssis est pourvu d'un dispositif d'accouplement pour accrocher un chariot ou un élément similaire.
